# FASCICULE DE BREVET EUROPEEN

(11) **EP 2 780 865 B1**
(45) Date de publication et mention de la délivrance du brevet: **15.03.2017**
(21) Numéro de dépôt: 11782434.2
(22) Date de dépôt: 15.11.2011
(51) Int. Cl.: G06K 7/14, G06K 19/06

(54) **MOTIF DE CODAGE D'UNE INFORMATION NUMÉRIQUE SUR UNE SURFACE ET PROCÉDÉS DE MARQUAGE ET DE LECTURE**
MUSTER ZUR KODIERUNG DIGITALER INFORMATIONEN AUF EINER OBERFLÄCHE SOWIE MARKIERUNGS- UND LESEVERFAHREN
PATTERN FOR ENCODING DIGITAL INFORMATION ON A SURFACE, AND MARKING AND READING METHODS

(43) Date de publication de la demande: 24.09.2014
(73) Titulaire: Sicpa Holding SA, 1008 Prilly (CH)
(72) Inventeur: DECOUX, Eric, CH-1800 Vevey (CH); VUISTINER, Dave, CH-1010 Lausanne (CH)
(74) Mandataire: Hoffmann Eitle
(86) Numéro de dépôt international: PCT/EP2011/070186
(87) Numéro de publication internationale: WO 2013/071960

(56) Documents cités:
- WO-A1-2012/037985
- FR-A1- 2 882 173
- US-A- 5 809 160
- US-A1- 2005 199 721

## Description

L'invention concerne le codage d'informations numériques sur une surface au moyen d'un ou plusieurs motifs, en particulier des motifs bidimensionnels en vue de l'identification d'articles ou de dispositifs de sécurité.

L'invention concerne également les articles ou dispositifs de sécurité comprenant de tels motifs, ainsi que des procédés de marquage et de lecture de ces motifs sur de tels articles ou dispositifs de sécurité.

Actuellement, on sait identifier des articles et des dispositifs de sécurité par une marque ou un logo inscrit sur un emballage de l'article ou sur l'article lui-même. Ces inscriptions, sont visibles et permettent l'identification de l'article par tous les utilisateurs.

On peut également utiliser d'autres identifiants visibles qui contiennent des informations chiffrées pour que le contenu de l'identifiant ne soit pas reconnu par tous les utilisateurs. On peut citer, par exemple, des identifiants à une dimension du type code barres ou à deux dimensions du type matrice de données ou « data matrix », généralement imprimés sur une surface, et qui sont les plus utilisés.

Les codes barres représentent des informations à l'aide d'un motif constitué de barres de différentes épaisseurs et d'espaces. Mais ces motifs sont facilement déchiffrables.

Par ailleurs, les identifiants du type « data matrix » utilisent des pixels blancs et noirs formant un motif d'identification et qui sont agencés au sein du motif sous une forme rectangulaire ou quadratique. Une telle matrice de données ou « data matrix » repérée par deux zones pleines adjacentes en forme de « L », dont l'ensemble est appelé « pattern ou motif de repérage », et de deux bordures formées de pixels blancs et noirs en alterné, appelées « clock ». Le motif en forme de « L » est utilisé pour localiser et orienter le motif d'identification et le motif appelé « clock » permet de compter le nombre de colonnes et de lignes dans le motif d'identification. En outre, le « data matrix » nécessite encore une zone dite « vierge », parfois appelée « quiet zone », pour détecter le motif de repérage. Cette zone dite « vierge » est utilisée pour isoler nettement le motif de repérage de tout autre élément de l'article avec lequel il pourrait être confondu.

Mais ces identifiants, visibles par l'utilisateur, de par notamment leur motif de repérage et leur zone de détection, doivent être marqués en un endroit choisi sur l'article afin de ne pas dénaturer son aspect général. Par ailleurs, le motif de repérage est un motif connu et constant quel que soit l'article à identifier. Ce motif de repérage ne contient pas d'information et sert uniquement à la détection du motif d'identification.

En outre, ces matrices de données ou « data matrix », pourtant pourvus de mécanismes de correction d'erreurs, ne sont pas suffisamment robustes car elles dépendent du substrat sur lequel elles sont apposées. En effet, en fonction des aspérités du substrat, ce dernier peut dégrader le motif lors de son marquage sur l'article. La robustesse d'un tel motif dépend également de la qualité d'impression, car un défaut d'impression, par exemple une encre qui s'étale ou une absence d'impression d'un pixel, peut altérer fortement le motif. Dans certains cas, une matrice de données ou « data matrix » de dimension 16 pixels par 16 pixels peut ainsi être rendue illisible par la destruction de plus de six pixels.

La demande de brevet américaine US2005/0199721 A1 est relatif à un code barre à deux dimensions. Ce code barre est constitué d'une pluralité d'éléments rectangulaires assemblés sur une surface de façon à former un code barre rectangulaire.

Chaque élément rectangulaire correspond à une portion d'information binaire codée et comprend une pluralité de carrés qui sont alternativement soit blancs soit noirs.

Il est proposé selon la présente invention, un motif de codage d'une information numérique qui améliore la robustesse de l'identification d'articles classiques ou de dispositifs de sécurité.

Il est également proposé un motif de codage d'une information numérique qui soit invisible pour l'utilisateur tout en étant détectable par un système de détection adapté.

En outre, il est proposé un motif de codage d'une information numérique pouvant être imprimé et lu quand bien même la qualité d'impression est moindre et également quand la résolution utilisée est fine, par exemple au moins 300 points par pouces (« DPI : Dots Per Inch » en langue anglaise) et de préférence entre 300 DPI et 600 DPI.

Selon un aspect de l'invention, il est proposé un motif de codage d'une information numérique sur une surface, selon les revendications 1 à 7.

Les symboles de l'ensemble de symboles peuvent être tous différents.

En variante, les symboles de l'ensemble de symbole sont identiques, en d'autres termes, l'ensemble de symboles ne comprend qu'un symbole comprenant au moins une paire différentielle d'éléments ayant des valeurs de paramètres différents.

Dans la présente description, on entend par paire différentielle, une paire d'éléments dont le premier élément peut être caractérisé par une première valeur d'un paramètre et le deuxième élément peut être caractérisé par une deuxième valeur de ce paramètre, différente de la première valeur du paramètre. Cette différence de valeur de paramètre peut être toute différence détectable, quand bien même cette différence n'est pas décelable à l'oeil nu.

Les valeurs des paramètres caractérisant deux éléments d'une paire différentielle peuvent être respectivement supérieures et inférieures à une première valeur de référence et/ou l'écart entre les deux valeurs peut être supérieur à une deuxième valeur de référence.

Par élément, on entend par exemple une portion de surface marquée de manière à lui attribuer une valeur d'un paramètre capable de caractériser cette portion de surface en rendant sa détection possible par rapport à toute portion de surface voisine ou immédiatement adjacente. A titre d'exemple non limitatif, les éléments peuvent être des portions de surface sous forme de taches ou de reliefs localisés, qui peuvent présenter un contour approximativement circulaire. Bien entendu, d'autres formes sont possibles. Les éléments peuvent être réalisés par impression d'une encre sur la surface, par calandrage, emboutissage ou par toute autre méthode appropriée.

Les symboles peuvent appartenir à un ensemble de symboles, et ils peuvent correspondre à une disposition spécifique d'une ou plusieurs paires différentielles. Dans un symbole, les éléments d'une paire différentielle ont une position relative fixe, mais les valeurs de paramètre de ces éléments sont différentes.

En outre, dans la présente description, un arrangement spécifique de symboles comprenant des paires différentielles est appelé un « pattern » ou un motif de référence.

Chaque symbole de l'ensemble de symboles peut avoir au moins une première et une deuxième représentation différente de la première représentation, les valeurs des paramètres des éléments d'au moins une paire différentielle du symbole étant toutes deux différentes entre la première représentation et la deuxième représentation.

Lesdites au moins deux représentations d'un symbole ayant une unique paire différentielle sont par exemple obtenus par un agencement d'une paire différentielle dans la configuration du symbole et des valeurs de paramètre différentes pour les deux éléments entre les deux représentations.

Ainsi, comme on peut représenter chaque symbole dans ses plusieurs représentations, on peut représenter un même arrangement de symboles, ou « pattern », de plusieurs façons différentes. En outre, l'augmentation du nombre de symboles, ou l'augmentation du nombre de paires différentielle des symboles, permet d'augmenter considérablement le nombre de possibilités de marquage pour un même arrangement.

On notera que le motif de codage est illisible pour un utilisateur qui ne connait pas préalablement les symboles utilisés et leurs représentations, et l'arrangement de ces symboles. Quand bien même un utilisateur pourrait détecter les éléments marqués sur une surface, ne connaissant pas les symboles ni leur arrangement en « pattern », il lui est très difficile, voire quasi impossible, de déterminer les symboles marqués selon différentes représentations. Il est donc quasi impossible de retrouver l'information numérique codée par le motif de codage sans la connaissance des symboles, des représentations des symboles, et de leur arrangement.

En outre le motif de codage de l'invention ne nécessite pas l'utilisation d'un repère particulier supplémentaire de type motif en forme de « L », « clock » ou encore « quiet zone » pour sa lecture ultérieure. Par rapport à une matrice de données du type « data matrix », le motif de codage selon l'invention ne comporte pas de zone de détection spécifique pour le repérage du motif de codage. C'est l'arrangement spécifique des symboles qui permet le repérage.

On notera que les symboles du motif de codage de la présente invention sont différents des symboles d'une matrice de données de type « data matrix » : les symboles d'une matrice de données sont en effet des pixels, par exemple noirs ou blanc, et non des paires différentielles d'éléments.

Dans un mode de réalisation, la disposition du premier élément et du deuxième élément d'une paire différentielle d'éléments dans une représentation d'un symbole, est l'inverse de la disposition du premier élément et du deuxième élément de la même paire différentielle du même symbole dans une autre représentation.

En d'autres termes, la différence de la valeur dudit paramètre entre le premier élément et le deuxième élément de ladite paire différentielle du symbole dans une représentation peut être positive, et la différence de la valeur dudit paramètre entre le premier élément et le deuxième élément de ladite paire différentielle du symbole dans une autre représentation peut être négative. Il peut en être de même pour tout ou partie des autres paires différentielles de symbole.

Une paire différentielle d'un symbole comprendra ainsi dans une représentation un premier élément ayant un niveau haut (pour ledit paramètre), et un deuxième élément ayant un niveau bas. Dans une autre représentation du symbole, c'est le premier élément qui a un niveau bas, et le deuxième qui a un niveau haut. On notera que dans un exemple préféré, la valeur moyenne du paramètre au sein des éléments de la paire différentielle sera la même dans les deux représentations.

Bien entendu, pour les symboles comprenant plusieurs paires différentielles, une paire différentielle pourra être inchangée entre deux représentations différentes si au moins une autre paire différentielle du symbole est modifiée entre ces deux représentations.

On notera qu'un ensemble de symboles dans lesquels le paramètre des éléments des paires différentielles ne peut avoir que deux valeurs (ou des valeurs au voisinage de deux valeurs différentes) permet de former un motif ayant un aspect homogène en ce qui concerne ledit paramètre. On rend ainsi la détection des symboles davantage difficile, les symboles étant difficiles à discerner.

En outre, l'écart entre les valeurs des paramètres des deux éléments d'une paire différentielle peut être supérieur à un premier seuil (par exemple ladite deuxième valeur de référence) et inférieur à un deuxième seuil. Ainsi, les paires différentielles d'une représentation d'un symbole comprennent deux éléments ayant chacun une valeur d'un paramètre, et la différence de valeur entre les deux éléments est supérieure à un premier seuil et inférieure à un deuxième seuil.

En variante, les valeurs des paramètres des deux éléments d'une paire différentielle d'éléments sont respectivement supérieures et inférieures à la valeur moyenne dudit paramètre au sein des paires différentielles voisines de ladite paire différentielle.

Ainsi, lors de la détection d'une paire différentielle, on peut calculer la valeur moyenne du paramètre dans une zone correspondant au voisinage de la paire différentielle comprenant par exemple plusieurs paires différentielles ou plusieurs éléments marqués, puis on compare la valeur du paramètre de chaque élément de la paire concernée à ladite valeur moyenne. On peut ainsi vérifier que la paire est effectivement une paire différentielle, et ensuite à quelle représentation elle correspond.

Les éléments peuvent être choisis dans le groupe comprenant les taches, les empreintes et les reliefs, et ledit paramètre peut être compris dans le groupe formé par les composantes colorimétriques, la profondeur, la hauteur, l'absorption électromagnétique, les propriétés magnétiques (par exemple la perméabilité ou la susceptibilité magnétique), la forme, la quantité d'encre utilisée, la conductivité électrique, la luminescence (fluorescence et/ou phosphorescence).

Les composantes colorimétriques peuvent être la teinte, la saturation, la luminosité, selon un système bien connu de l'homme du métier sous l'acronyme anglo-saxon de « HSL : Hue Saturation Lightness ». Ledit paramètre pourra être l'une de ces composantes, par exemple la luminosité pour deux éléments d'une paire différentiels noir et blanc ou encore gris et gris-foncé. On peut également utiliser un autre système, par exemple le système rouge, vert, bleu, bien connu de l'homme du métier sous l'acronyme anglo-saxon de « RGB : Red Green Blue ».

La portion de ladite information numérique du symbole peut être une valeur binaire définie par la représentation du symbole.

Ainsi, une paire différentielle d'un symbole peut correspondre à ou plusieurs bits d'information dont la valeur est définie par exemple en fonction du signe et/ou de l'amplitude de la différence entre la valeur du paramètre du premier élément de la paire différentielle et la valeur du paramètre du deuxième élément de la paire différentielle. On peut également attribuer plusieurs bits à une seule paire différentielle d'éléments, par exemple en utilisant plusieurs paramètres. Par ailleurs, l'amplitude de la différence peut être une valeur numérique comprenant plusieurs bits.

Les symboles du motif peuvent définir une valeur binaire correspondant à ladite information numérique codée par le motif.

On pourra également définir un ordre de lecture des symboles arrangés dans un « pattern » pour restituer l'ensemble des bits de la valeur codée par le « pattern ».

Le motif peut être marqué au sein d'une image comprenant des pixels, lesdits éléments étant des pixels modifiés de l'image et ledit paramètre étant au moins une composante colorimétrique de pixel.

Selon un autre aspect, il est proposé un article ou dispositif de sécurité selon les revendications 8 à 10 et comprenant au moins un motif tel que défini ci avant.

L'article ou dispositif de sécurité peut comprendre plusieurs motifs identiques et/ou différents.

Grâce à la répétition du motif de codage, on améliore la robustesse vis-à-vis de son identification ultérieure. Du fait de la répétition du motif, la destruction ou la dégradation d'un motif n'empêche pas de détecter la présence d'au moins un autre motif ou « pattern » parmi l'ensemble des motifs marqués sur l'article. En utilisant des motifs ayant un aspect homogène, on peut marquer plusieurs motifs sans nuire à l'aspect visuel de l'article ou du dispositif de sécurité.

L'article ou dispositif de sécurité peut être choisi parmi une étiquette, un emballage, une cartouche, un conteneur comprenant des denrées alimentaires, des produits nutraceutiques, des produits pharmaceutiques ou des boissons, un billet de banque, une carte de crédit, un timbre, un timbre fiscal, un témoin d'intégrité, un document sécurisé, un passeport, une carte d'identité, un permis de conduire, une carte d'accès, un billet de transport, un billet d'admission, un coupon, une forme d'impression, un film réfléchissant, du papier d'aluminium et un article commercial.

L'article ou dispositif de sécurité peut comprendre au moins un motif marqué au sein d'une image ou d'un logo ou d'une représentation codée d'une autre information numérique choisie dans le groupe formé par les code-barres unidimensionnels, bidimensionnels ou tridimensionnels, les nuages de points, les réseaux de lignes, les matrices de données (ou data-matrix).

Ainsi, on peut coder une information dans une représentation codant une autre information. A titre d'exemple non limitatif, on peut marquer un motif dans les barres d'un code-barre, en imprimant un motif selon l'invention avec une résolution suffisamment petite pour marquer des éléments ayant une valeur de paramètre différente au sein d'une barre de code-barre.

On notera également que la surface marquée peut être cachée sous une couche d'un autre matériau, par exemple sous une couche d'un film plastique et/ou polymérique. On pourra ainsi lire le motif aisément à travers une telle couche d'un film plastique et/ou polymérique.

En marquant un nombre élevé de motifs de petite taille, on pourra froisser la surface marquée (et/ou une couche disposée au dessus) ou l'altérer grandement tout en conservant la possibilité de lire au moins un motif marqué. Par contraste, les code-barres ou les matrices de données utilisés jusqu'à présent,sont généralement marqués une seule fois sur un article, et une altération les rend illisibles.

Selon un autre aspect, il est proposé un procédé de marquage d'un motif de codage d'une information numérique sur une surface selon la revendication 11.

Les symboles de l'ensemble de symboles peuvent être tous différents.

En variante, les symboles de l'ensemble de symboles peuvent être identique, l'ensemble de symboles comprenant alors un seul symbole.

Les valeurs des paramètres de deux éléments d'une paire différentielle peuvent être respectivement supérieures et inférieures à une première valeur de référence et/ou l'écart entre les valeurs est supérieur à une deuxième valeur de référence.

On peut définir pour chaque symbole de l'ensemble de symboles au moins une première représentation et une deuxième représentation différente de la première représentation, les valeurs des paramètres des éléments d'au moins une paire différentielle du symbole étant toutes deux différentes entre la première représentation et la deuxième représentation.

La disposition du premier élément et du deuxième élément d'une paire différentielle d'éléments dans une représentation d'un symbole est l'inverse de la disposition du premier élément et du deuxième élément de la même paire différentielle du même symbole dans une autre représentation.

L'écart entre les valeurs des paramètres des deux éléments d'une paire différentielle peut être supérieur à un seuil.

En variante, les valeurs des paramètres des deux éléments d'une paire différentielle d'éléments sont respectivement supérieures et inférieures à la valeur moyenne dudit paramètre au sein des paires différentielles voisines de ladite paire.

Le marquage des éléments peut comprendre une impression ou une gravure ou un dépôt ou un emboutissage ou une application d'un faisceau laser, et ledit paramètre peut être compris parmi le groupe formé par les composantes colorimétriques, la profondeur, la hauteur, l'absorption électromagnétique, les propriétés magnétiques, la forme, la quantité d'encre utilisée, la conductivité électrique, la luminescence (fluorescence et/ou phosphorescence).

On peut définir la portion de ladite information numérique du symbole comme étant une valeur binaire définie par la représentation du symbole.

Les symboles du motif peuvent définir une valeur binaire correspondant à ladite information numérique codée par le motif.

On peut marquer le motif au sein d'une image comprenant des pixels, lesdits éléments étant des pixels de l'image et ledit paramètre étant au moins une composante colorimétrique de pixel.

Le procédé peut comprendre en outre, préalablement à l'étape de marquage des éléments sur ladite surface, une élaboration desdites paires différentielles des symboles du motif comprenant une mesure d'au moins une composante colorimétrique de deux pixels de l'image destinés à former une paire différentielle d'un symbole, un calcul de la différence de la mesure des deux pixels, une modification de la valeur de ladite au moins une composante colorimétrique des deux pixels si la différence est inférieure à un seuil.

La modification de la valeur de ladite au moins une composante colorimétrique des deux pixels comprend une augmentation d'une valeur additionnelle de ladite valeur d'un premier pixel de la paire différentielle et une diminution de ladite valeur additionnelle d'un deuxième pixel de la paire différentielle. Ainsi, on augmente autant la valeur d'un pixel qu'on diminue celle de l'autre pixel de la paire différentielle. La modification se fait donc sans changement de la valeur moyenne pour les deux pixels de la paire différentielle, et l'on préserve l'image.

Bien entendu, l'image peut être une image numérique avant d'être marquée afin de faciliter les modifications des valeurs des pixels.

On peut marquer une surface d'un article ou d'un dispositif de sécurité.

On peut marquer sur l'article ou dispositif de sécurité plusieurs motifs identiques et/ou différents.

L'article ou dispositif de sécurité peut être choisi parmi une étiquette, un emballage, une cartouche, un conteneur comprenant des denrées alimentaires, des produits nutraceutiques, des produits pharmaceutiques ou des boissons, un billet de banque, une carte de crédit, un timbre, un timbre fiscal, un témoin d'intégrité, un document sécurisé, un passeport, une carte d'identité, un permis de conduire, une carte d'accès, un billet de transport, un billet d'admission, un coupon, une forme d'impression, un film réfléchissant, du papier d'aluminium et un article commercial.

On peut marquer sur l'article ou dispositif de sécurité au moins un motif au sein d'une image ou d'un logo, ou d'une représentation codée d'une autre information numérique choisie dans le groupe formé par les code-barres unidimensionnels, bidimensionnels ou tridimensionnels, les nuages de points, les réseaux de lignes, les matrices de données.

Selon encore un autre aspect, il est proposé un procédé de lecture d'une information numérique, codée dans un motif marqué sur une surface, selon la revendication 12.

Les symboles de l'ensemble de symboles peuvent être tous différents.

En variante, les symboles de l'ensemble de symboles peuvent être tous identiques.

Par image, on entend une représentation bidimensionnelle d'au moins la valeur du paramètre au sein de ladite zone.

On notera que ce procédé de lecture est différent d'un procédé de reconnaissance optique de caractères (« OCR : Optical Character Récognition » en langue anglaise) en que les symboles, selon un aspect de l'invention, sont des paires d'éléments ayant une valeur d'un paramètre différent c'est-à-dire des paires différentielles. Les symboles d'une méthode dite « OCR » ne comprennent pas de paires différentielles d'éléments mais une unique forme, celle du caractère à reconnaître.

L'identification des symboles peut comprendre en outre une comparaison de la valeur des paramètres de deux éléments marqués d'une paire différentielle à une première valeur de référence et/ou une comparaison de l'écart entre les deux valeurs et une valeur de référence.

Chaque symbole de l'arrangement mémorisé peut avoir au moins une première représentation et une deuxième représentation différente de la première représentation, les valeurs des paramètres des éléments étant toutes deux différentes entre la première représentation et la deuxième représentation.

La disposition du premier élément et du deuxième élément d'une paire différentielle d'éléments dans une représentation d'un symbole peut être l'inverse de la disposition du premier élément et du deuxième élément de la même paire différentielle du même symbole dans une autre représentation.

L'identification des symboles peut comprendre en outre une comparaison à un seuil de l'écart entre les valeurs des paramètres des deux éléments d'une paire différentielle.

En variante, l'identification des symboles peut comprendre en outre une mesure de la valeur moyenne dudit paramètre au sein des paires différentielles voisines d'une paire différentielle d'éléments et on compare cette valeur moyenne à la valeur du paramètre de chaque élément de ladite paire différentielle.

Ledit paramètre peut être compris parmi le groupe formé par les composantes colorimétriques, la profondeur, la hauteur, l'absorption électromagnétique, les propriétés magnétiques, la forme, la quantité d'encre utilisée, la conductivité électrique, la luminescence (fluorescence et/ou phosphorescence), et ladite image capturée peut comprendre une représentation de la valeur de ce paramètre sur ladite zone.

La portion de ladite information numérique peut être une valeur binaire définie par la représentation du symbole.

Les symboles du motif peuvent définir une valeur binaire correspondant à ladite information numérique codée par le motif.

Le motif peut être marqué au sein d'une image comprenant des pixels, lesdits éléments étant des pixels de l'image et ledit paramètre étant au moins une composante colorimétrique de pixel.

Ladite surface marquée peut être une surface d'un article ou dispositif de sécurité et la surface marquée peut être une partie ou l'intégralité de la surface de l'article ou du dispositif de sécurité.

Plusieurs motifs identiques et/ou différents peuvent être marqués sur l'article ou dispositif de sécurité.

L'article ou dispositif de sécurité peut être compris dans le groupe formé par une étiquette, un emballage, une cartouche, un conteneur comprenant des denrées alimentaires, des produits nutraceutiques, des produits pharmaceutiques ou des boissons, un billet de banque, une carte de crédit, un timbre, un timbre fiscal, un témoin d'intégrité, un document sécurisé, un passeport, une carte d'identité, un permis de conduire, une carte d'accès, un billet de transport, un billet d'admission, un coupon, une forme d'impression, un film réfléchissant, du papier d'aluminium et un article commercial.

Le motif peut être marqué sur l'article ou dispositif de sécurité au sein d'une image ou d'un logo, ou d'une représentation codée d'une autre information numérique choisie dans le groupe formé par les code-barres unidimensionnels, bidimensionnels ou tridimensionnels, les nuages de points, les réseaux de lignes, les matrices de données.

Selon encore un autre aspect qui ne fait pas partie de l'invention, il est proposé un système apte à mettre en oeuvre ledit procédé de marquage. Ce système peut comprendre des moyens de traitement aptes à définir ledit arrangement spécifique et ledit motif de codage, par exemple un dispositif informatique, un dispositif comprenant un microprocesseur et/ou des circuits logiques et des moyens de marquage d'éléments caractérisés par ledit paramètre sur une surface.

Selon un autre aspect qui ne fait pas partie de l'invention, il est proposé un système apte à mettre en oeuvre ledit procédé de lecture. Ce système peut comprendre un téléphone mobile équipé d'un appareil photo, une tablette équipée d'un appareil photo, une caméra portable ou fixe, un scanner ou portable ou fixe. D'une manière générale, ce système peut comprendre des moyens de mémorisation dudit arrangement spécifique, un dispositif de lecture présentant une fenêtre de lecture dont les dimensions sont au moins égales à celles du motif marqué, des moyens d'identification d'éléments, des moyens d'identification de symboles.

Selon un autre aspect qui ne fait pas partie de l'invention, il est proposé une utilisation dudit motif pour l'authentification d'un article ou dispositif de sécurité.

D'autres avantages et caractéristiques de l'invention apparaîtront à l'examen de la description détaillée de quelques exemples de modes de mise en oeuvre et de réalisation, nullement limitatifs, et des dessins annexés, sur lesquels :
- la figure 1 illustre schématiquement un mode de mise en oeuvre d'une élaboration d'un motif selon l'invention,
- la figure 2 illustre schématiquement un autre mode de mise en oeuvre d'une élaboration d'un motif selon l'invention,
- la figure 3 illustre schématiquement un mode de mise en oeuvre d'un procédé de marquage du motif de la figure 1 sur un article ou dispositif de sécurité,
- la figure 4 illustre schématiquement un mode de mise en oeuvre d'un procédé de lecture d'un motif d'identification appliqué sur un article,
- la figure 5 illustré schématiquement un mode de réalisation d'un motif selon l'invention,
- la figure 6 illustre un autre mode de mise en oeuvre et de réalisation selon l'invention.

Dans les figures, les mêmes références correspondent aux mêmes éléments. Les éléments des figures ne sont pas dessinés à l'échelle.

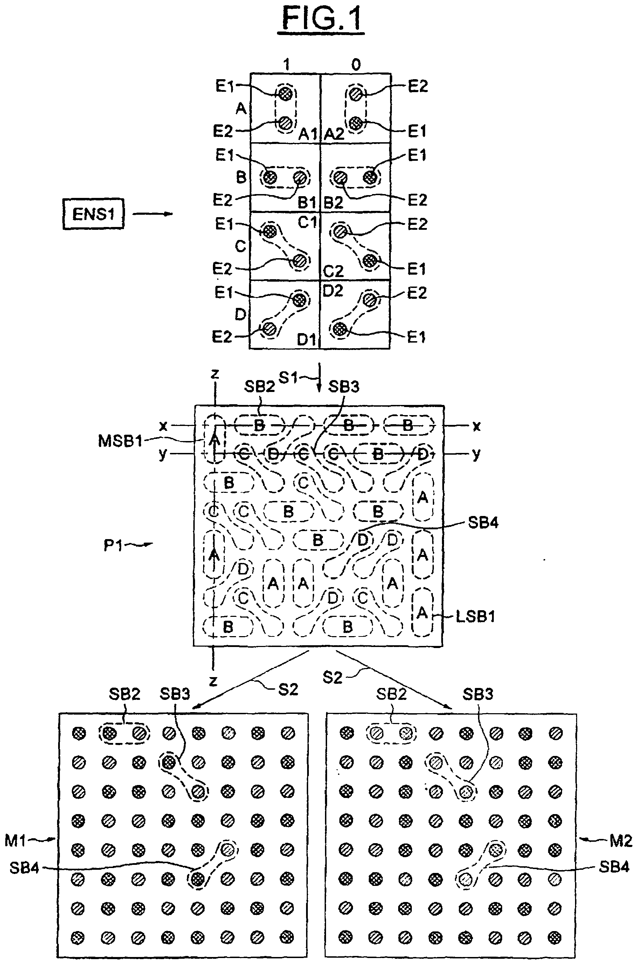

Sur la figure 1, on a représenté schématiquement un mode de mise en oeuvre d'une élaboration S1 d'un arrangement P1 de symboles selon l'invention.

Les symboles de l'arrangement P1, notés A, B, C et D, appartiennent à un ensemble de symbole ENS1.

Les symboles A, B, C et D, au nombre de quatre dans cet exemple (mais qui pourraient bien entendu être plus nombreux) comprennent une paire différentielle d'éléments référencés E1 et E2 sur la figure. Les éléments E1 et E2 sont représentés sur la figure, à titre d'exemple et afin de mieux faire comprendre l'invention par des taches quadrillées ou hachurées illustrant des valeurs différentes d'un paramètre, le paramètre étant par exemple le niveau de gris. Les taches quadrillées E1 présentent, dans l'exemple illustré, une valeur dé paramètre supérieure à celle des taches hachurées E2. Autrement dit, les taches constituant les éléments E1 sont plus sombres que celles constituant les éléments E2. Les éléments E1 et E2 constituent ainsi une paire différentielle selon l'invention.

La position respective des éléments d'une paire différentielle E1 et E2 définit le symbole (A à D).

Dans l'exemple illustré, les éléments E1 et E2 d'une paire différentielle sont éloignés l'un de l'autre de la taille approximative d'un élément. D'autres dispositions sont possibles. Les deux éléments d'une paire différentielle d'un symbole peuvent être proches, et même en contact, ou au contraire davantage éloignés. La forme des éléments, ici une forme de tache circulaire, peut également être différente, par exemple rectangulaire, triangulaire ou elliptique, dans des variantes de l'invention.

En outre, dans l'ensemble de symboles ENS1, les symboles sont tous différents et chacun de ces symboles comprend deux représentations possibles. La position relative des éléments de la paire différentielle est ici inchangée pour les deux représentations d'une paire différentielle. Entre deux représentations, les valeurs de paramètre des éléments peuvent changer, ou alors on peut inverser les éléments, mais leur disposition dans la paire différentielle et dans le symbole restera la même.

Ainsi, le symbole A comprend une paire différentielle d'éléments E1 et E2 disposés dans un arrangement vertical dans les deux représentations A1 et A2. Dans la première représentation A1 du symbole A, l'élément E1 qui est une tache quadrillée, est disposé au dessus de l'élément E2, qui est une tache hachurée. Dans la deuxième représentation A2, c'est l'élément E2 qui est au dessus de l'élément E1. Ainsi, le symbole A comprend une paire différentielle d'éléments disposés verticalement et deux représentations dans lesquelles les éléments E1 et E2 ont été inversés.

Le symbole B comprend également une paire différentielle d'éléments E1 et E2, mais disposés horizontalement. Dans une première représentation B1, l'élément E1 est à gauche de l'élément E2, dans une deuxième représentation B2, l'élément E1 est à droite de l'élément E2.

Le symbole C comprend une paire différentielle d'éléments E1 et E2 disposés dans une première direction diagonale. Dans une première représentation C1 l'élément E1 est disposé au dessus à gauche de l'élément E2, et dans une deuxième représentation C2, l'élément E1 est disposé en dessous à droite de l'élément E2.

Enfin, le symbole D comprend une paire différentielle d'éléments E1 et E2 disposés dans une deuxième direction diagonale opposée à ladite première direction diagonale du symbole C. Dans une première représentation D1, l'élément E1 est disposé au dessus à droite de l'élément E2, et dans une deuxième représentation D2, l'élément E1 est disposé en dessous à gauche de l'élément E2.

Les quatre symboles A, B, C et D définis ainsi avec chacun deux représentations définissent l'ensemble ENS1 avec lequel le « pattern » ou motif de référence P1 est élaboré (S1).

On notera que les deux représentations de chaque symbole de l'ensemble ENS1 peuvent définir un bit d'une valeur binaire. A titre d'exemple, les représentations A1, B1, C1 et D1 correspondent à la valeur 1, et les représentations A2, B2, C2 et D2 correspondent à la valeur 0.

L'arrangement de symboles constituant le motif de référence P1 peut être élaboré en agençant des symboles de l'ensemble ENS1, sans définir la représentation de ces symboles. Dans l'exemple illustré, les symboles sont agencés dans une zone rectangulaire dans laquelle l'espace est utilisé de manière à inclure un nombre maximal de symboles dans cette zone. Les symboles sont par exemples imbriqués les uns dans les autres et les éléments de ces symboles sont alignés verticalement et horizontalement au sein de l'arrangement P1. On comprendra que, dans l'arrangement de symboles constituant le motif de référence P1, les symboles pourraient être agencés dans une zone de forme géométrique différente, par exemple carrée, circulaire, elliptique, triangulaire ou autre.

Dans l'exemple illustré, un symbole A est disposé en haut à droite de l'arrangement P1, un élément de ce symbole est disposé à l'intersection d'un axe horizontal X-X et d'un axe vertical Z-Z, et un élément à l'intersection d'un axe horizontal Y-Y, décalé d'environ la dimension d'un élément E1 ou E2 par rapport à l'axe horizontal X-X et de l'axe vertical Z-Z. On peut disposer un symbole B sous ce symbole A en alignant un élément de droite de ce symbole B avec l'axe Z-Z. On peut également disposer un symbole B à droite du symbole A dont les deux éléments sont alors alignés avec l'axe X-X.

Le « pattern » ou motif de référence P1 comprend, dans l'exemple illustré, 32 symboles de l'ensemble de symboles ENS1. Chacun de ces symboles ayant deux représentations, on pourra élaborer dans cet exemple, 2³² = 4 294 967 296 motifs de référence ou « pattern » P1 différents. En outre, en associant un bit à chaque symbole, on pourra coder 2³² valeurs binaires au moyen de cet arrangement de symboles P1.

On notera qu'en augmentant le nombre de symboles du « pattern » ou motif de référence P1, on augmente le nombre de possibilités de représentations du même « pattern » et le nombre de valeurs numériques qui peuvent être codées au moyen de ce « pattern ». De manière générale, pour un ensemble de symboles comprenant chacun une paire différentielle et ayant deux représentations, on pourra obtenir, pour un « pattern » ayant n symboles, 2ⁿ représentations et valeurs différentes.

Afin d'utiliser le « pattern » pour coder une valeur numérique, il est nécessaire d'attribuer un ordre de lecture aux symboles qui composent le « pattern ».

Ainsi, pour une valeur binaire comprenant 32 bits, le bit dit de poids fort (« MSB : Most Significant Bit » en langue anglaise) peut être attribué au symbole MSB1 du pattern P1, ici un symbole A disposé en haut à gauche du « pattern » P1. Le bit dit de poids faible (« LSB : Least Significant Bit ») peut être attribué au symbole LSB1, ici un symbole A disposé en bas à droite du « pattern » P1. L'ordre dans lequel les autres bits sont attribués peut être par exemple de gauche vers la droite et de haut en bas du « pattern » P1. Selon un aspect, il est également possible d'attribuer un ordre des bits aléatoire dans lequel les bits successifs ne sont pas adjacents.

Une opération notée S2 sur la figure permet d'élaborer un motif de codage d'une information numérique comprenant des symboles appartenant à l'ensemble ENS1 et arrangés selon le « pattern » ou motif de référence P1. On a représenté deux exemples possibles de motifs M1 et M2 obtenus par l'opération S2. Les motifs M1 et M2 correspondent à deux valeurs numériques différentes. Bien entendu, le nombre de motifs Mn qu'il est possible d'obtenir par l'opération S2 n'est pas limité.

Dans l'exemple illustré, le bit de poids fort MSB1 de la valeur codée dans le motif M1 est égal à celui de la valeur codée dans le motif M2 et correspond ici à une représentation A1 : 1. Le deuxième bit de ces valeurs, correspondant au symbole SB2, un symbole B, est représenté dans la représentation B1 au sein du motif M1, et dans la représentation B2 au sein du motif M2. Ainsi, Le deuxième bit de la valeur codée dans le motif M1 correspond à un 1 et dans le motif M2 à un 0. D'autres symboles sont représentés dans des représentations différentes pour les deux motifs M1 et M2, par exemple les symboles SB3 et SB4. Il peut en être de même pour tous les symboles des différents motifs de codage obtenus par l'opération S2.

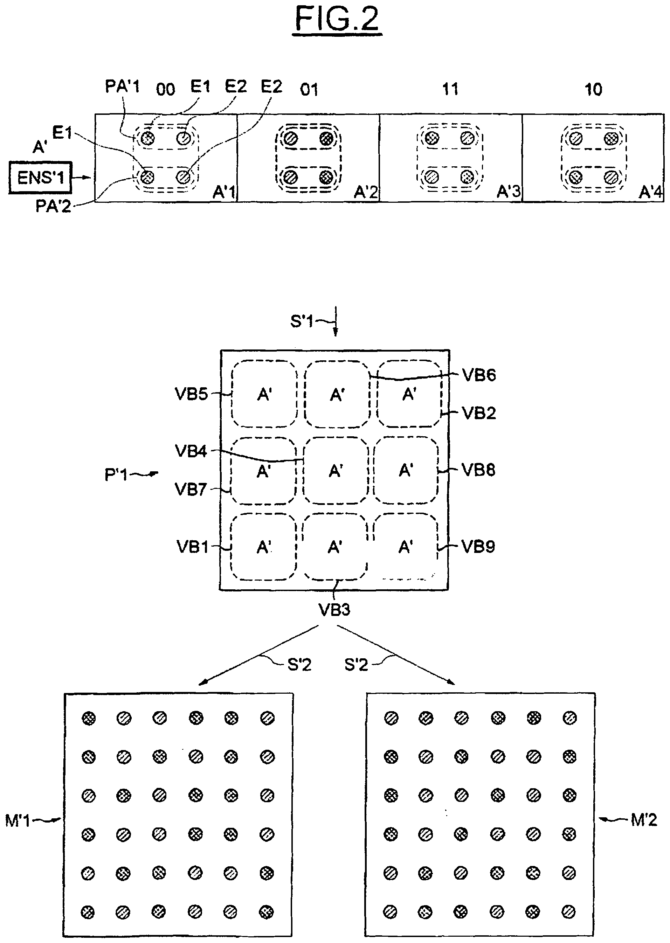

Sur la figure 2, on a représenté de façon schématique un autre mode de mise en oeuvre d'une élaboration S'1 d'un arrangement de symboles ou motif de référence P' 1. Dans cet exemple l'ensemble de symboles ENS'1 ne comprend qu'un unique symbole, mais il pourrait également comprendre plusieurs symboles différents.

L'ensemble de symboles ENS'1 comprend ici un unique symbole A' comprenant deux paires différentielles d'éléments. Le symbole A' comprend deux paires différentielles dont les éléments sont alignées horizontalement et les paires différentielles sont disposées verticalement.

L'utilisation de deux paires différentielles permet notamment de définir quatre représentations. On obtient une représentation A'1 dans laquelle une paire différentielle PA'1 est disposée au dessus d'une paire différentielle PA'2. Dans la représentation A'1, la paire différentielle PA'1 et la paire différentielle PA'2 comprennent toute deux un élément E1 à droite, un élément E2 à gauche. En modifiant la position respective des éléments E1 et E2 au sein des paires différentielles PA'1 et PA'2 dans les représentations A'2, A'3 et A'4, on obtient les autres représentations du symbole A'.

On notera qu'une inversion de la disposition des éléments d'une des paires différentielle dans une représentation permet d'obtenir une autre représentation du symbole A' de l'ensemble ENS'1.

On notera que l'on peut attribuer des valeurs binaires à ces représentations. Par exemple la valeur 00 à la représentation A'1, la valeur 01 à la représentation A'2, la valeur 11 à la représentation A'3 et la valeur 10 à la représentation A'4.

Dans cet exemple, l'ensemble ENS'1 ne comprend qu'un symbole. Bien entendu, dans la pratique, on pourra prévoir un plus grand nombre de symboles similaires au symbole A' et ayant une ou plusieurs paires différentielles pouvant être agencées de différentes manière.

Lors de l'opération S'1, on peut agencer plusieurs symboles A' pour former un « pattern » ou motif de référence P' 1. Ce « pattern » comporte, dans l'exemple illustré, 9 symboles, capables chacun de coder deux bits. On pourra donc coder 2^{2x9} = 262 144 valeurs différentes. On pourra coder ces valeurs en utilisant l'ordre des symboles suivant : VB1 (poids fort), VB2, VB3, VB4, VB5, VB6, VB7, VB8 puis VB9 (poids faible).

Dans l'exemple illustré on a élaboré, lors de l'opération S'2, deux motifs M'1 et M'2 dans lesquels sont codés deux valeurs numériques différentes.

Plus précisément, on a codé la valeur binaire 10 00 00 01 00 10 10 00 01 = 132 257 dans le motif M'1 en suivant l'ordre VB1 à VB9 et en utilisant les valeurs binaires définies ci-avant pour les représentations A'1, A'2, A'3, A'4. Dans le motif M'2, on a codé la valeur binaire 01 11 10 1010 10 00 01 00 = 125572. Bien entendu, de manière classique, on peut obtenir des caractères au moyen de ces valeurs binaires, par exemple en utilisant le codage ASCII, bien connu de l'homme du métier.

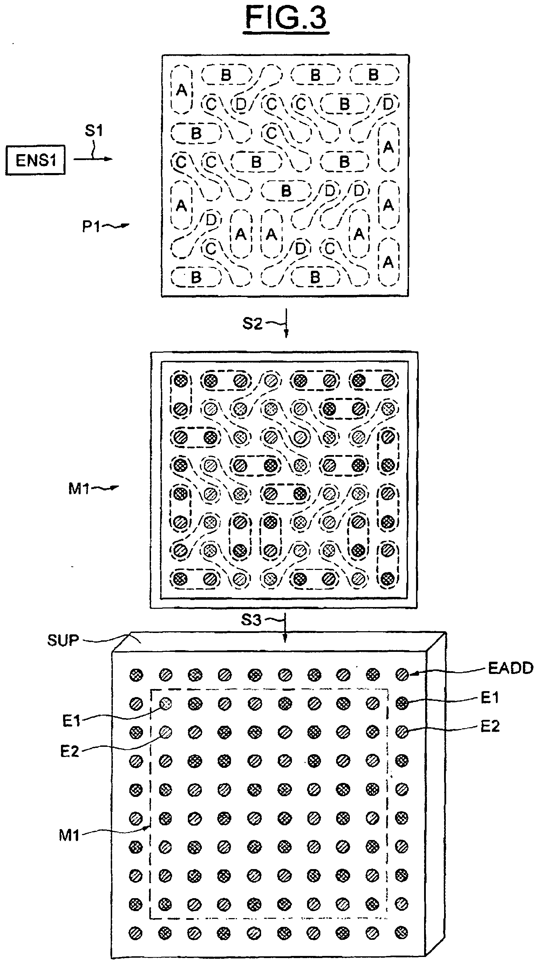

Sur la figure 3, on a représenté schématiquement un mode de mise en oeuvre d'un procédé de marquage d'un article ou dispositif de sécurité SUP à l'aide de deux motifs M1 et M2 tels qu'illustrés sur la figure 1, dans lesquels sont codées deux informations numériques différentes.

Ce procédé comprend l'étape S1 d'élaboration d'un arrangement de symboles ou « pattern » P1 au moyen d'un ensemble de symboles ENS1. L'opération S2 est ensuite mise en oeuvre pour obtenir un motif M1 dans lequel est codée une information numérique au moyen du « pattern » P1 comprenant 32 symboles. On pourra se référer à la description ci dessus relative à la figure 1 pour plus de précisions sur les opérations S1 et S2. Le motif M1 ainsi que tout autre motif également créé par l'opération S2, peut être ensuite mémorisé sur un support informatique.

L'étape S3 comprend un marquage du motif M1 mémorisé, sur un article ou dispositif de sécurité SUP. Par marquage, on entend une impression, par exemple d'encre visible ou invisible, une gravure, un dépôt, un emboutissage, un calandrage, une application d'un faisceau laser ou toute autre opération permettant de disposer le motif de codage M1 ainsi que tout autre motif de codage sur l'article ou le dispositif de sécurité. L'article ou dispositif de sécurité SUP peut être une étiquette, un emballage, une cartouche, un conteneur comprenant des denrées alimentaires, des produits nutraceutiques, des produits pharmaceutiques ou des boissons, un billet de banque, une carte de crédit, un timbre, un timbre fiscal, un témoin d'intégrité, un document sécurisé, un passeport, une carte d'identité, un permis de conduire, une carte d'accès, un billet de transport, un billet d'admission, un coupon, une forme d'impression, un film réfléchissant, du papier d'aluminium, un article commercial ou, d'une manière générale, un article ou dispositif que l'on souhaite équiper d'un moyen d'identification ou de données codées difficilement repérables sans équipement approprié.

L'étape de marquage S3 correspond notamment à un marquage des éléments, E1 et E2 dans l'exemple illustré, des paires différentielles des symboles A, B, C, D. On notera que l'article ou dispositif de sécurité SUP présente, sur sa surface extérieure ou son emballage, un nuage d'éléments analogues à ceux du motif de codage M1 mais ne constituant pas dans son ensemble un motif de codage. Aucun marquage destiné à former un repère ne figure sur l'article, seuls les éléments des paires différentielles du motif de référence ou « pattern » M1 étant marqués sur l'article au sein même du nuage d'éléments indifférenciés précités. Ainsi, contrairement aux matrices de données utilisées dans l'art antérieur (« data matrix »), tous les éléments marqués correspondent à une information de la valeur codée dans un motif de codage. En utilisant une résolution fine, par exemple de l'ordre de plusieurs centaines d'éléments par pouce (« DPI : Dots Per Inch » en langue anglaise), par exemple entre 150 et 600 DPI ou de préférence entre 300 et 600 DPI, on peut marquer des motifs selon l'invention qui ne seront pas détectables par un utilisateur mais qu'un équipement approprié comportant un système de lecture électronique pourra seul détecter et interpréter. Une telle résolution permet également de marquer une pluralité de motifs de petite taille : le marquage de l'information est ainsi particulièrement robuste car une altération d'un ou même quelques motifs ne rendra pas illisible l'intégralité des motifs marqués. L'utilisation d'une telle résolution fine permet également d'empêcher la reproduction d'un motif, par exemple au moyen d'une photocopieuse.

Afin de rendre indétectable à l'oeil nu un motif selon l'invention, on peut également marquer des motifs dont les valeurs de paramètres sont peu différentes (notamment les valeurs des éléments d'une paire différentielle). Plus précisément, on peut choisir des valeurs de paramètres qu'un oeil humain ne peut pas discerner mais qu'un appareil peut détecter. On pourra alors également utiliser une résolution grossière, par exemple plus large que 150 DPI, sans pour autant permettre à un utilisateur de discerner les différents éléments qui constituent un motif. Bien entendu, le motif dans son ensemble ou une pluralité de motifs adjacents peuvent être visible par un utilisateur, qui ne verra qu'une zone homogène, par exemple colorée uniformément.

On notera que le motif M1 peut être marqué au sein d'un élément graphique de l'article ou dispositif de sécurité SUP, cet élément graphique pouvant être une image ou un logo, ou une représentation codée d'une autre information numérique, par exemple des code-barres unidimensionnels, bidimensionnels ou tridimensionnels, des nuages de points, des réseaux de ligne ou des matrices de données.

A titre d'exemple non limitatif, on peut marquer des motifs selon l'invention dans les barres d'un code-barre..

Dans l'exemple illustré, simultanément à l'étape de marquage S3, on a marqué un certain nombre d'autres éléments additionnels EADD de type E1 ou E2 en dehors du motif M1. Dans l'exemple illustré, les éléments additionnels EADD forment une rangée entourant le motif M1. Les éléments additionnels sont ici alignés avec les éléments du motif M1, ce qui permet de rendre difficile la lecture du motif de codage M1. Les éléments additionnels peuvent également être plus nombreux, en nombre très supérieur au nombre d'éléments qui forment le motif de codage M1, et avec des dispositions différentes.

Ces éléments additionnels EADD peuvent faire partie par exemple d'une zone graphique de l'article ou du dispositif de sécurité. Les éléments additionnels EADD peuvent notamment servir à noyer le motif de codage M1 pour le rendre encore plus difficile à détecter. Ces éléments additionnels n'étant pas agencés sous la forme de paires différentielles dans un « pattern » ou motif de référence, ils ne fausseront pas la lecture de l'information numérique codée dans le motif de codage M1. On comprendra également que ces éléments additionnels EADD peuvent préexister sur l'article, auquel cas il n'est pas nécessaire de procéder à leur marquage au cours de l'étape S3.

Dans tous les cas, il peut être avantageux de choisir une représentation des éléments E1 et E2 qui se rapproche le plus possible de la représentation des éléments additionnels EADD de façon à rendre la détection et la lecture du motif de codage M1 plus difficile.

On notera que plusieurs moyens permettent de rendre le motif marqué encore plus indétectable à l'oeil nu. Par exemple, on peut utiliser une encre dont la nature chimique la rend invisible à l'oeil nu mais simplement visible sous éclairage spécifique, par exemple à l'aide d'éclairages à infrarouges ou ultraviolets. La composition de ces encres peut comprendre un ou plusieurs pigments et/ou des colorants qui absorbent dans le visible ou invisible du spectre électromagnétique et/ou peut comprendre un ou plusieurs pigments et/ou des colorants qui sont luminescents. Des exemples non limitatifs de pigments appropriés et/ou des colorants qui absorbent dans le visible ou invisible du spectre électromagnétique englobent, à titre d'exemple non limitatif, les dérivés de phtalocyanine mais aussi les dérivés de type perrylene, quaterylene substitués ou non. Des exemples non limitatifs de pigments luminescents appropriés et/ou des colorants comprennent les dérivés des lanthanides. La présence de pigment(s) et/ou de colorant(s) permet d'améliorer et de renforcer la sécurité du marquage contre la contrefaçon. Certains composés cités ci-avant permettent de conférer des propriétés de traçabilité et/ou d'authentification au marquage selon l'invention. En effet, ces composés particuliers diffèrent des encres classiques et leur détection par exemple par des moyens d'analyse chimique ou physique peut permettre de déterminer l'origine du produit marqué.

On peut également mélanger le ou les motifs de codage marqués avec un bruit, par exemple en intégrant le motif de codage dans un environnement de la surface de l'article ou dispositif de sécurité SUP comprenant des irrégularités ou des taches préexistantes. Ces irrégularités ou ces taches doivent de préférence présenter une taille et un aspect comparables à la taille et à l'aspect des motifs de codage marqués.

Le motif de codage M1 marqué sur l'article ou dispositif de sécurité SUP, ainsi que tout autre motif de codage supplémentaire élaboré de manière analogue, peut permettre de coder une information permettant d'authentifier l'article ou le dispositif de sécurité SUP ou encore une information relative à l'utilisation de l'article ou du dispositif de sécurité SUP.

On notera qu'utiliser un ensemble de symboles comprenant chacun des éléments similaires, et un « pattern » ou motif de référence comprenant un nombre élevé de symboles permet d'obtenir un marquage ayant un aspect homogène, dans lequel on ne peut pas lire l'information codée sans la connaissance des symboles, des représentations des symboles et du « pattern » de référence utilisé. Par ailleurs, l'utilisation de paires différentielles comprenant deux élément ayant deux valeurs de paramètres possibles tels que les éléments E1 et E2 illustrés ici à titre d'exemple, permet d'obtenir un motif comprenant autant d'éléments E1 que d'éléments E2, et donc, un aspect homogène de la surface extérieure de l'article ou du dispositif de sécurité.

On peut marquer plusieurs motifs de codage selon l'invention sur l'article ou élément de sécurité SUP. On peut marquer plusieurs motifs identiques, et également plusieurs motifs différents. On peut également recouvrir une surface de l'article ou élément de sécurité SUP.

A titre d'exemple non limitatif, on peut marquer des motifs de codage selon l'invention sur l'intégralité d'une surface d'un emballage, destiné à recouvrir un objet. La lecture des motifs de codage pourra ainsi être mise en oeuvre à partir de toute portion de surface de l'emballage recouvrant l'objet. On pourra par exemple marquer des films plastique sensiblement transparents, ou également des films opaques de type papier d'aluminium. On pourra également, en utilisant des moyens de marquage appropriés, marquer des motifs de codage selon l'invention sur des surfaces très rugueuses ou non uniformes, par exemple des bouchons de bouteille de vin voire sur le scellé correspondant.

Par ailleurs, certains articles vendus dans le commerce pour des raisons esthétiques ou des contraintes liées à leur production n'ont que peu de place disponible pour supporter un marquage. Le marquage selon l'invention permet de s'affranchir de ces contraintes. En effet, le ou les motifs peuvent être marqués sur des supports ayant une surface réduite tout en restant invisible à l'oeil nu, en conservant la robustesse de lecture selon un procédé de l'invention.

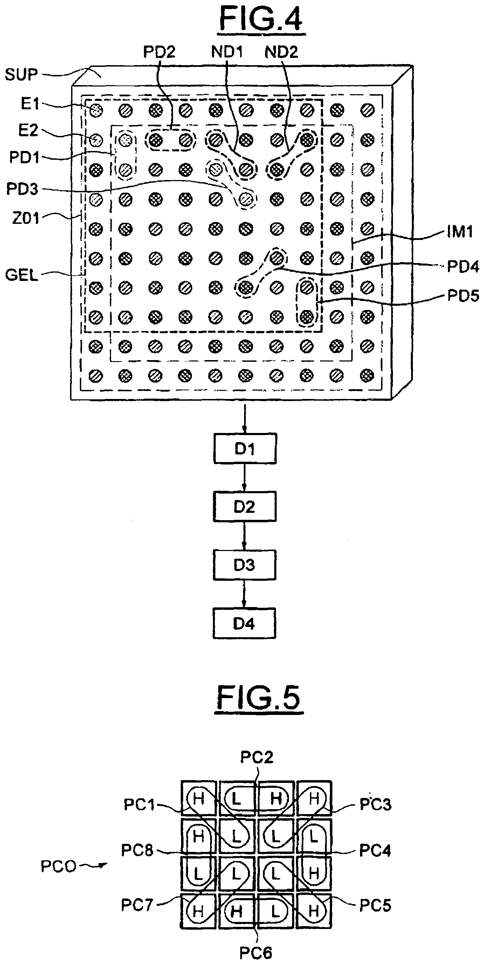

Sur la figure 4, on a représenté un mode de mise en oeuvre d'un procédé de lecture d'une information numérique codée dans un motif de codage selon l'invention, marqué sur une surface d'un article ou dispositif de sécurité SUP.

Préalablement à la mise en oeuvre de la lecture, on mémorise dans une mémoire d'un système de lecture, un ensemble de symboles, par exemple l'ensemble ENS1 déjà mentionné à titre d'exemple en référence à la figure 1 ou l'ensemble ENS'1 déjà mentionné à titre d'exemple en référence à la figure 2 ainsi qu'un ou plusieurs arrangements de symboles ou motifs de référence.

Puis, dans l'exemple illustré, le procédé comprend une étape D1 dans laquelle on capture une image d'une zone ZO1 d'une surface d'un article SUP. Le système apte à mettre en oeuvre l'étape D1 peut comprendre un dispositif de lecture tel qu'un lecteur ou scanner fixe ou portable, une caméra, un téléphone équipé d'un appareil photo numérique, une tablette équipée d'un appareil photo numérique, et d'une manière générale, tout moyen apte à rendre visible les éléments marqués, par exemple des lampes rayonnant dans les domaines infrarouges ou ultraviolets. L'image obtenue est ensuite mémorisée.

Une étape D2 d'identification d'éléments est ensuite mise en oeuvre. On pourra notamment identifier les éléments en fonction de la connaissance des symboles d'un ensemble de symboles, par exemple l'ensemble ENS1. Pour des symboles dont les éléments sont des taches de formes variées (par exemple les symboles de l'ensemble ENS1 illustré sur la figure 1), on détecte au sein de l'image obtenue lors de l'étape D1, une pluralité d'éléments, par exemple de type E1, E2. En outre, on peut mesurer, pour chaque élément une valeur de paramètre et mémoriser les valeurs mesurées.

Ensuite, lors de l'étape D3, on peut identifier les symboles au moyen d'un « pattern »ou motif de référence mémorisé, par exemple l'arrangement de symboles P1 illustré sur la figure 1. La zone ZO1 pouvant comprendre des éléments additionnels, par exemple des éléments additionnels EADD, l'identification des symboles peut comprendre plusieurs étapes jusqu'à l'identification des symboles du ou des motifs de codage au moyen du « pattern » ou motif de référence unique mémorisé.

On va maintenant décrire un exemple simplifié de mise en oeuvre de cette identification en se référant à l'exemple de la figure 1, étant entendu que la procédure serait analogue dans le cas de l'exemple de la figure 2. On peut commencer par faire correspondre l'arrangement de symboles P1 avec un premier groupe d'éléments GEL par une fenêtre d'étude du dispositif de lecture qui comprend ce groupe d'éléments GEL (comprenant un groupe de 64 éléments disposés selon un quadrillage). En faisant correspondre l'arrangement de symboles P1, c'est-à-dire le motif de référence mémorisé, avec le groupe d'éléments GEL, on remarque qu'un certain nombre de paires de symboles du groupe GEL correspondant à l'arrangement de symboles P1, ne sont pas des paires différentielles. Les paires ND1 et ND2 comprennent des paires d'éléments agencées comme deux paires de symboles de l'arrangement P1, mais ces paires ne sont pas des paires différentielles. En effet, elles comprennent respectivement deux éléments E2 et deux éléments E1. Dans les deux cas, il n'y a pas de différence de paramètre entre les deux éléments. On notera que deux éléments différents ne constituent pas toujours une paire différentielle, il convient notamment de mesurer l'écart entre les deux valeurs de paramètre des deux éléments, de le comparer à un seuil, ou de mesurer l'écart entre chaque valeur de paramètre et une valeur moyenne.

La fenêtre d'étude du dispositif de lecture peut avoir une taille au moins égale à celle d'un motif de codage marqué. La fenêtre d'étude peut notamment avoir des dimensions (largeur et hauteur) qui sont le double de celles d'un motif de codage marqué.

On peut donc utiliser les valeurs de paramètre obtenues lors de l'étape D2 pour déterminer si les paires d'éléments sont des paires différentielles. On pourra également comparer l'écart entre les valeurs à un seuil mémorisé, ou encore vérifier si les valeurs de chaque paramètre sont respectivement supérieures ou inférieures à une autre valeur, par exemple une valeur moyenne. Cette valeur moyenne peut être mémorisée préalablement ou être mesurée et calculée lors de l'étape D1 ou de l'étape D2 en observant la surface de l'article.

Les paires non différentielles ND1 et ND2 obtenues en faisant correspondre l'arrangement de symboles P1 avec le groupe d'éléments GEL montre que les éléments du groupe d'éléments GEL ne forment pas un motif de codage comprenant des symboles arrangés selon l'arrangement ou motif de référence P1.

On déplace ensuite relativement, le dispositif de lecture ou la fenêtre d'étude par rapport à l'article pour faire correspondre le « pattern » ou motif de référence P1 avec un autre groupe d'éléments, par exemple le groupe d'éléments IM1 (figure 4). Tous les éléments du groupe IM1 correspondent à des paires différentielles d'éléments de symboles arrangées selon le « pattern » ou motif de référence P1. On notera par exemple que la paire différentielle PD1 correspond au symbole correspondant au bit de poids fort MSB1, la paire différentielle PD2 correspond au symbole SB2, la paire différentielle PD3 correspond au symbole SB3, la paire différentielle PD4 correspond au symbole SB4 et la paire différentielle PD5 correspond au symbole correspondant au bit de poids faible LSB1.

On estime alors que le motif de codage a été trouvé au sein du groupe d'éléments IM1. On notera qu'en parcourant les groupes d'éléments marqués sur l'article ou le dispositif de sécurité SUP et en faisant correspondre le « pattern » ou motif de référence P1 avec des groupes d'éléments, on a retrouvé une représentation d'un motif de codage codant une information numérique, et ce sans utiliser de repaire indiquant l'emplacement du motif de codage sur l'article.

On notera qu'il est possible de ne pas exiger la reconnaissance de tous les symboles du motif de référence P1. On peut dans ce cas, calculer le nombre de symboles identifiés, et comparer ce nombre calculé à un seuil de probabilité. Si le nombre calculé est supérieur à ce seuil, on peut estimer qu'un motif de codage réalisé au moyen d'un « pattern » ou motif de référence selon l'invention est présent. Le motif est ainsi très robuste, une altération de symboles d'un motif n'empêchant pas la reconnaissance du motif de référence et de la lecture des symboles qui n'ont pas été détériorés.

A titre d'exemple non limitatif, pour un motif de référence comprenant 128 symboles, on peut prendre un seuil de probabilité de l'ordre de 30 symboles identifiés sur les 128, c'est-à-dire 24%. D'autres seuils de probabilité peuvent être utilisés, on pourra notamment choisir un seuil élevé afin de déterminer avec certitude que le motif de codage est repéré.

Enfin, une fois les symboles identifiés comme indiqué précédemment, on peut lire l'information codée par les éléments marqués formant un motif de codage au cours d'une étape D4. Cette lecture ne peut se faire qu'en ayant la connaissance de l'ordre de lecture de l'arrangement de symboles. On pourra utiliser l'ordre défini ci-avant dans lequel on lit de haut en bas et de la gauche vers la droite. La connaissance de l'ensemble de symboles et de leurs représentations respectives permet de détecter les valeurs binaires associées aux symboles marqués. On utilise les valeurs de paramètres mesurées lors de l'étape D2 pour déterminer la représentation utilisée. La lecture de la valeur binaire de chaque symbole permet de déterminer la valeur binaire codée dans le motif de codage marqué.

L'étape D4 peut également comprendre des étapes de correction d'erreurs classiques afin de déterminer les représentations des symboles qui n'ont pas été identifiés.

En outre, lors de la mise en oeuvre du procédé de lecture, on peut tolérer une marge de déplacement en hauteur et en largeur pour chaque élément marqué. A titre d'exemple non limitatif, de légères différences de diamètre dans les éléments n'altèrent pas la lecture. De légères différences de position n'altèrent pas non plus la lecture.

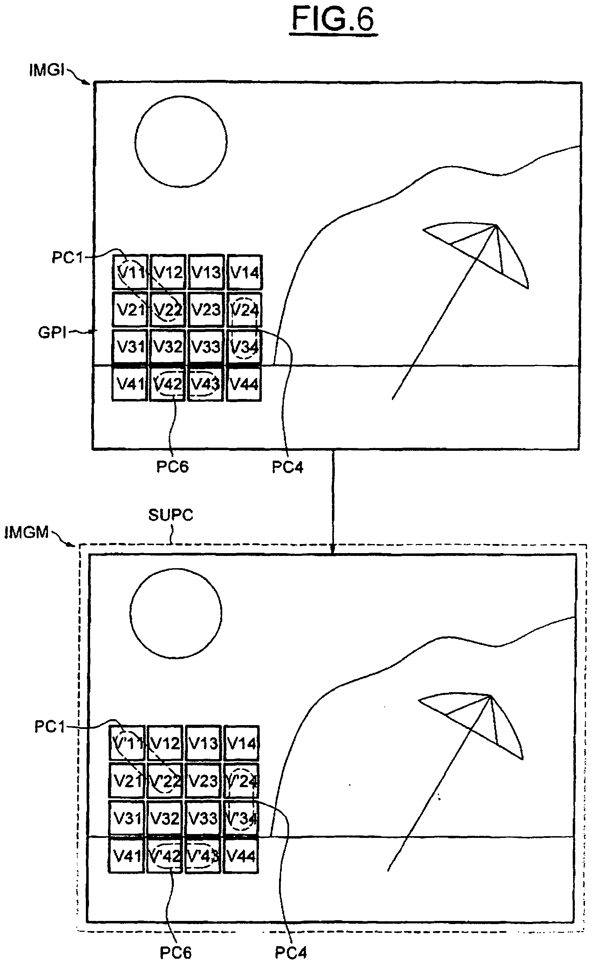

On va maintenant décrire plus en détails en se référant plus particulièrement aux figures 5 et 6, une variante de l'invention.

Sur la figure 5, on a représenté un motif de codage PCO dans lequel est codée une information selon un arrangement de huit symboles dans lequel les éléments des symboles sont des paires différentielles de pixels d'image. Les huit symboles sont arrangés dans une matrice de 4x4 pixels. Chaque pixel est caractérisé par un paramètre qui peut être l'une des composantes colorimétriques. Les symboles de ce motif PCO comprennent ainsi chacun des paires différentielles d'éléments semblables aux symboles de l'ensemble ENS1 de la figure 1, mais dans lequel les éléments sont des pixels.

En outre, les paires de pixels sont des paires différentielles dont la représentation est définie par les valeurs d'une composante colorimétrique, par exemple la teinte, la saturation ou la luminosité, de chacun des pixels de la paire différentielle. Plus précisément, un des pixels de la paire différentielle présente une valeur haute noté H et l'autre présente valeur basse noté L. En inversant la position respective de ces niveaux, on peut coder différentes informations numériques.

Le motif de codage PCO est destiné à être inclus dans une image, comme illustré sur la figure 6. Sur cette figure, on a représenté une image initiale IMGI comprenant de manière classique une pluralité de pixels et un groupe de 16 pixels GPI formant une matrice de pixels 4x4. C'est au sein du groupe de pixels GPI que l'on va inclure le motif de codage PCO. L'imagine initiale IMGI peut être une image numérique, stockée au sein d'une mémoire et modifiable par des moyens de traitement, par exemple équipés d'un microprocesseur et/ou de circuits logiques. Une fois modifiée pour inclure le motif de codage PCO, cette image peut être marquée sur une surface d'un article ou d'un élément de sécurité.

Chaque pixel du groupe de pixels GPI présente une valeur d'une composante colorimétrique choisie notée VIJ, I allant de 1 à 4 indiquant la colonne du pixel dans la matrice 4x4, et J allant de 1 à 4 indiquant la ligne du pixel dans la matrice 4x4. On peut ensuite vérifier si chaque paire de pixels dans le groupe de pixels GPI correspond à une paire différentielle selon le motif PCO.

En comparant la valeur des pixels V11 et V22 de la paire de pixels PC1, si V11 est supérieur à V22 et si l'écart entre les deux valeurs est inférieur à un seuil, dans le groupe de pixels GPI, alors il est nécessaire de modifier la valeur de la composante colorimétrique ce ces pixels, par exemple en augmentant V11 et en diminuant V22 d'une même valeur pour obtenir les pixels modifiés V'11 et V'22 de l'image modifiée IMGM.

L'augmentation et la diminution d'une même valeur est particulièrement avantageuse, ainsi, la valeur moyenne du paramètre au sein de la paire PC1 est la même pour les valeurs V11 et V22 et pour les valeurs V'11 et V'22.

D'autres paires de pixels peuvent ainsi être modifiées. Par exemple, les pixels de la paire PC4 peuvent avoir des valeurs V24 et V34 mais V24 peut être supérieur à V34. En d'autres termes, V24 correspond à une valeur haute et V34 à valeur basse. Afin de marquer la paire PC4 du motif PCO on peut inverser les valeurs de ces pixels, et on obtient les valeurs V'24 et V'34. On peut également inverser, augmenter et diminuer comme ci-avant les valeurs des pixels, par exemple les valeurs des pixels de la paire PC6 pour obtenir des valeurs V'42 et V'43.

Les valeurs des pixels des paires restantes du groupe de pixels GPI n'ont pas été modifiées, car les valeurs des pixels de l'image initiale peuvent également déjà correspondre à des paires différentielles du motif de codage PCO.

Ainsi, au sein de l'image modifiée IMGM (ici marquée sur un article ou dispositif de sécurité SUPC), on a marqué le motif PCO en modifiant les valeurs de pixels de l'image initiale IMGI. Les modifications de valeurs de pixels sont imperceptibles pour un utilisateur, puisqu'intervenant au niveau de pixels voisins dans des images pouvant comprendre des millions de pixels.

On notera que l'on peut également utiliser d'autres composantes colorimétriques, par exemple des composantes du système Rouge-Vert-Bleu.

Par ailleurs, afin de déterminer si dans une paire de pixel, l'un est à une valeur haute et l'autre à une valeur basse, on peut comparer ces valeurs à une valeur moyenne obtenue par un calcul de la valeur de la composante pour plusieurs pixels voisins. On peut également calculer une valeur moyenne relative à une autre composante. A titre d'exemple non limitatif, le niveau de rouge des pixels voisins d'une paire différentielle peut définir la valeur moyenne ou un seuil auquel on compare les valeurs de la paire.

On propose également un système apte à mettre en oeuvre un procédé de marquage, par exemple le procédé de la figure 3. Dans un mode de réalisation, ce système peut comprendre une mémoire configurée pour stocker un ensemble de symboles, un arrangement de ces symboles constituant un motif de référence, et des informations numériques à coder. Le système peut comprendre des moyens de marquage sur une surface d'un article ou d'un dispositif de sécurité, par exemple des moyens d'impression, de gravure, d'emboutissage, de calandrage, de dépôt, d'application d'un faisceau laser ou de tout autre procédé permettant la modification de portions de la surface considérée. Ces moyens de marquage peuvent permettre de marquer des éléments invisibles à l'oeil nu.

On propose en outre un système apte à mettre en oeuvre un procédé de lecture, par exemple le procédé de la figure 4. Ce système peut comprendre des moyens de mémorisation d'un arrangement de symboles constituant un motif de référence et d'un ensemble de symboles, et des moyens aptes à capturer une image tels qu'une caméra, un lecteur ou scanner fixe ou portable, un téléphone portable équipé d'un appareil photo, une tablette équipée d'un appareil photo, des moyens pour révéler les éléments marqués tels qu'une lampe rayonnant dans l'ultraviolet ou l'infrarouge, et des moyens de traitements aptes à identifier les éléments et les symboles à partir de l'image capturée comprenant par exemple un microprocesseur et/ou des circuits logiques.

On notera que selon un aspect, les motifs de codage obtenus peuvent être utilisés pour authentifier un article, et ainsi améliorer sa traçabilité et détecter les contrefaçons d'articles. On peut également marquer des informations relatives à l'utilisation de l'article.

Un marquage de motifs de codage selon l'invention a une robustesse particulièrement élevée. On pourra marquer des motifs en utilisant une résolution fine, par exemple 300 dpi, de façon à obtenir des motifs ayant individuellement une taille inférieure au millimètre carré, pour enfin recouvrir une surface par exemple de l'ordre de un ou plusieurs centimètres carrés. Bien entendu, d'autres résolutions et dimensions sont possibles.

A titre d'exemple non limitatif, on peut marquer de tels motifs de codage selon l'invention sur une surface de l'ordre d'un centimètre carré. Ces motifs peuvent être visibles dans leur ensemble ou invisibles pour un utilisateur. La totalité de la surface marquée peut avoir des dimensions par exemple similaires à une matrice de données. Dans le cas où les motifs sont visibles, ils peuvent avoir un aspect homogène pour un utilisateur, ou également être noyés dans une image.

Une altération quelconque de la surface marquée n'empêche pas la détection du motif de référence utilisé, ni la lecture de l'information numérique codée dans les motifs. La surface peut par exemple avoir été altérée au moyen d'un stylobille ou d'un crayon, elle peut avoir été froissée, pliée, grattée ou déchirée. De telles altérations peuvent avoir été combinées sans empêcher la lecture de l'information numérique codée dans les motifs.

Par contraste, de tels traitements d'altération appliqués à des marquages classiques de type code-barres ou matrice de données rendraient la lecture des informations contenues dans ces marquages totalement impossible.

## Revendications

1. Motif de codage d'une information numérique sur une surface, comprenant un arrangement spécifique (P1, P'1) d'une pluralité de symboles appartenant à un ensemble de symboles (ENS1), chaque symbole dans l'arrangement étant destiné au codage d'une portion de ladite information numérique, **caractérisé en ce que** chaque symbole est constitué d'au moins une paire différentielle d'éléments (E1, E2) disposés d'une manière spécifique, chaque élément étant **caractérisé par** un paramètre, le paramètre du premier élément de chaque paire différentielle ayant une première valeur et le paramètre du deuxième élément de chaque paire différentielle ayant une deuxième valeur différente de la première valeur et en ce que ledit arrangement spécifique correspond à un arrangement prédéterminé desdits symboles constituant un motif de référence.

2. Motif selon la revendication 1, dans lequel les symboles de l'ensemble de symboles sont tous différents ou tous identiques.

3. Motif selon l'une quelconque des revendications précédentes, dans lequel les valeurs des paramètres des deux éléments (E1, E2) d'une paire différentielle sont respectivement supérieures et inférieures à une première valeur de référence et/ou l'écart entre les deux valeurs est supérieur à une deuxième valeur de référence.

4. Motif selon l'une quelconque des revendications précédentes, dans lequel chaque symbole de l'ensemble de symboles a au moins une première (A1, B1, C1, D1) et une deuxième représentation (A2, B2, C2, D2) différente de la première représentation, les valeurs des paramètres des éléments d'au moins une paire différentielle du symbole étant toutes deux différentes entre la première représentation et la deuxième représentation.

5. Motif selon la revendication 4, dans lequel la disposition du premier élément et du deuxième élément d'une paire différentielle d'éléments dans une représentation d'un symbole est l'inverse de la disposition du premier élément et du deuxième élément de la même paire différentielle du même symbole dans une autre représentation.

6. Motif selon l'une quelconque des revendications 3 à 5, dans lequel l'écart entre les valeurs des paramètres des deux éléments d'une paire différentielle est supérieur ou inférieur à un seuil.

7. Motif selon l'une quelconque des revendications 3 à 6, dans lequel les valeurs des paramètres des deux éléments d'une paire différentielle d'éléments sont respectivement supérieures et inférieures à la valeur moyenne dudit paramètre au sein des paires différentielles voisines de ladite paire différentielle.

8. Article ou dispositif de sécurité (SUP) comprenant au moins un motif selon l'une quelconque des revendications précédentes.

9. Article ou dispositif de sécurité selon la revendication 8, comprenant plusieurs motifs identiques et/ou différents.

10. Article ou dispositif de sécurité (SUP) selon l'une quelconque des revendications 8 ou 9, comprenant au moins un motif marqué au sein d'une image ou d'un logo, ou d'une représentation codée d'une autre information numérique choisie dans le groupe formé par les code-barres unidimensionnels, bidimensionnels ou tridimensionnels, les nuages de points, les réseaux de lignes, les matrices de données.

11. Procédé de marquage d'un motif de codage d'une information numérique sur une surface **caractérisé en ce qu'**il comprend les étapes suivantes :
- on définit un arrangement spécifique ou motif de référence d'une pluralité de symboles appartenant à un ensemble de symboles (ENS1), chaque symbole dans l'arrangement étant destiné au codage d'une portion d'information numérique, chaque symbole étant constitué d'au moins une paire d'éléments disposés de manière spécifique, - on élabore un motif de codage de ladite information numérique au moyen de l'arrangement spécifique ou motif de référence d'une pluralité de symboles, en donnant à chaque symbole une représentation spécifique de façon que chaque symbole soit constitué d'au moins une paire différentielle d'éléments, chaque élément étant **caractérisé par** un paramètre, le paramètre du premier élément ayant une première valeur et le paramètre du deuxième élément ayant une deuxième valeur différente de la première valeur,
- on fournit une surface,
- on marque une pluralité d'éléments (E1, E2) sur ladite surface, les éléments étant caractérisés chacun par ledit paramètre,
l'étape de marquage de la pluralité d'éléments se fait de sorte que certains éléments marqués forment le motif de codage de l'information numérique.

12. Procédé de lecture d'une information numérique codée dans un motif de codage marqué sur une surface comportant des éléments marqués caractérisés chacun par un paramètre, procédé **caractérisé par le fait qu'**il comprend les étapes successives suivantes :
a) on mémorise un arrangement spécifique ou motif de référence (P1) d'une pluralité de symboles appartenant à un ensemble de symboles (ENS1), chaque symbole dans l'arrangement étant destiné au codage d'une portion de ladite information numérique, chaque symbole étant constitué d'au moins une paire différentielle d'éléments disposés de manière spécifique, le paramètre du premier élément de chaque paire différentielle ayant une première valeur et le paramètre du deuxième élément de chaque paire différentielle ayant une deuxième valeur différente de la première valeur,
b) on capture par une fenêtre d'étude d'un dispositif de lecture une image d'une zone de ladite surface sur laquelle figure un groupe d'éléments marqués,
c) on fait correspondre le motif de référence mémorisé avec ledit groupe d'éléments marqués
d) on mesure l'écart entre les valeurs de paramètre des deux éléments de paires des symboles du groupe d'éléments marqués afin de déterminer s'il s'agit de paires différentielles
e) si ce n'est pas le cas, on déplace relativement la fenêtre de lecture par rapport à la surface comportant des éléments marqués et on capture une image d'une autre zone de ladite surface sur laquelle figure un autre groupe d'éléments marqués
f) on répète les étapes c) et d) jusqu'à ce qu'un nombre déterminé d'éléments du groupe d'éléments marqués corresponde à des paires différentielles arrangées selon le motif de référence mémorisé
g) puis on lit l'information numérique codée par les éléments du motif de codage marqué retrouvé au sein d'un groupe d'éléments marqués.

13. Procédé selon la revendication 12, dans lequel on calcule le nombre de symboles identifiés et on compare le résultat du calcul à un seuil de probabilité.

14. Procédé selon l'une des revendications 12 ou 13, dans lequel l'identification des symboles comprend une comparaison de la valeur des paramètres de deux éléments marqués d'une paire différentielle à une première valeur de référence et/ou une comparaison de l'écart entre les deux valeurs et une valeur de référence.

15. Procédé selon l'une quelconque des revendications 12 à 14, dans lequel l'identification des symboles comprend une comparaison à un seuil de l'écart entre les valeurs des paramètres des deux éléments d'une paire d'éléments.

## Patentansprüche

1. Codiermuster einer digitalen Information auf einer Fläche, die ein spezifisches Arrangement (P1, P'1) einer Vielzahl von Symbolen enthält, die zu einer Einheit von Symbolen (ENS1) gehören, wobei jedes Symbol im Arrangement zur Codierung eines Abschnitts der digitalen Information bestimmt ist, **dadurch gekennzeichnet, dass** jedes Symbol aus mindestens einem differentiellen Paar von Elementen (E1, E2) besteht, die spezifisch angeordnet sind, wobei jedes Element durch einen Parameter gekennzeichnet ist, wobei der Parameter des ersten Elements jedes differentiellen Paars einen ersten Wert und der Parameter des zweiten Elements jedes differentiellen Paars einen zweiten Wert anders als der erste Wert hat, und dass das spezifische Arrangement einem vorbestimmten Arrangement der Symbole entspricht, das ein Bezugsmuster bildet.

2. Muster nach Anspruch 1, wobei die Symbole der Einheit von Symbolen alle unterschiedlich oder alle gleich sind.

3. Muster nach einem der vorhergehenden Ansprüche, wobei die Werte der Parameter der zwei Elemente (E1, E2) eines differentiellen Paars höher bzw. niedriger als ein erster Bezugswert sind und/oder die Abweichung zwischen den zwei Werten höher als ein zweiter Bezugswert ist.

4. Muster nach einem der vorhergehenden Ansprüche, wobei jedes Symbol der Einheit von Symbolen mindestens eine erste (A1, B1, C1, D1) und eine zweite Darstellung (A2, B2, C2, D2) anders als die erste Darstellung hat, wobei die Werte der Parameter der Elemente mindestens eines differentiellen Paars des Symbols alle zwei zwischen der ersten Darstellung und der zweiten Darstellung unterschiedlich sind.

5. Muster nach Anspruch 4, wobei die Anordnung des ersten Elements und des zweiten Elements eines differentiellen Paars von Elementen in einer Darstellung eines Symbols die Umkehrung der Anordnung des ersten Elements und des zweiten Elements des gleichen differentiellen Paars des gleichen Symbols in einer anderen Darstellung ist.

6. Muster nach einem der Ansprüche 3 bis 5, wobei die Abweichung zwischen den Werten der Parameter der zwei Elemente eines differentiellen Paars höher oder niedriger als eine Schwelle ist.

7. Muster nach einem der Ansprüche 3 bis 6, wobei die Werte der Parameter der zwei Elemente eines differentiellen Paars von Elementen höher bzw. niedriger als der Mittelwert des Parameters innerhalb der dem differentiellen Paar benachbarten differentiellen Paare sind.

8. Sicherheitsartikel oder -vorrichtung (SUP), der/die mindestens ein Muster nach einem der vorhergehenden Ansprüche enthält.

9. Sicherheitsartikel oder -vorrichtung nach Anspruch 8, der/die mehrere gleiche und/oder unterschiedliche Muster enthält.

10. Sicherheitsartikel oder -vorrichtung (SUP) nach einem der Ansprüche 8 oder 9, der/die mindestens ein markiertes Muster innerhalb eines Bilds oder eines Logos oder einer codierten Darstellung einer anderen digitalen Information enthält, die aus der Gruppe ausgewählt wird, die von den eindimensionalen, zweidimensionalen oder dreidimensionalen Strichcodes, den Punktwolken, den Liniennetzen, den Datenmatrizen gebildet wird.

11. Verfahren zur Markierung eines Codiermusters einer digitalen Information auf einer Fläche, **dadurch gekennzeichnet, dass** es die folgenden Schritte enthält:
- es wird ein spezifisches Arrangement oder Bezugsmuster einer Vielzahl von Symbolen definiert, die zu einer Einheit von Symbolen (ENS1) gehören, wobei jedes Symbol im Arrangement zur Codierung eines Abschnitts einer digitalen Information bestimmt ist, wobei jedes Symbol aus mindestens einem Paar von spezifisch angeordneten Elementen besteht,
- es wird ein Codiermuster der digitalen Information mittels des spezifischen Arrangements oder Bezugsmusters einer Vielzahl von Symbolen erarbeitet, indem jedem Symbol eine spezifische Darstellung verliehen wird, so dass jedes Symbol aus mindestens einem differentiellen Paar von Elementen besteht, wobei jedes Element durch einen Parameter gekennzeichnet ist, wobei der Parameter des ersten Elements einen ersten Wert und der Parameter des zweiten Elements einen zweiten Wert anders als der erste Wert hat,
- es wird eine Fläche bereitgestellt,
- eine Vielzahl von Elementen (E1, E2) wird auf der Fläche markiert, wobei die Elemente je durch den Parameter gekennzeichnet sind,
wobei der Schritt der Markierung der Vielzahl von Elementen so erfolgt, dass bestimmte markierte Elemente das Codiermuster der digitalen Information bilden.

12. Verfahren zum Lesen einer codierten digitalen Information in einem auf einer Fläche markierten Codiermuster, das markierte Elemente aufweist, die je durch einen Parameter gekennzeichnet sind, wobei das Verfahren **dadurch gekennzeichnet ist, dass** es die folgenden Schritte enthält:
a) es wird ein spezifisches Arrangement oder Bezugsmuster (P1) einer Vielzahl von Symbolen gespeichert, die zu einer Einheit von Symbolen (ENS1) gehören, wobei jedes Symbol im Arrangement zur Codierung eines Abschnitts der digitalen Information bestimmt ist, wobei jedes Symbol aus mindestens einem differentiellen Paar von spezifisch angeordneten Elementen besteht, wobei der Parameter des ersten Elements jedes differentiellen Paars einen ersten Wert und der Parameter des zweiten Elements jedes differentiellen Paars einen zweiten Wert anders als der erste Wert hat,
b) durch ein Untersuchungsfenster einer Lesevorrichtung wird ein Bild einer Zone der Fläche erfasst, auf der sich eine Gruppe von markierten Elementen befindet,
c) das gespeicherte Bezugsmuster wird mit der Gruppe von markierten Elementen in Übereinstimmung gebracht,
d) die Abweichung zwischen den Parameterwerten der zwei Elemente von Paaren der Symbole der Gruppe von markierten Elementen wird gemessen, um festzustellen, ob es sich um differentielle Paare handelt,
e) wenn dies nicht der Fall ist, wird das Lesefenster bezüglich der markierte Elemente aufweisenden Fläche verschoben, und es wird ein Bild einer anderen Zone der Fläche erfasst, auf der sich eine andere Gruppe von markierten Elementen befindet,
f) die Schritte c) und d) werden wiederholt, bis eine bestimmte Anzahl von Elementen der Gruppe markierter Elemente differentiellen Paaren entspricht, die gemäß dem gespeicherten Bezugsmuster arrangiert sind,
g) dann wird die von den Elementen des innerhalb einer Gruppe von markierten Elementen gefundenen markierten Codiermusters codierte digitale Information gelesen.

13. Verfahren nach Anspruch 12, wobei die Anzahl von erkannten Symbolen berechnet und das Ergebnis der Berechnung mit einer Wahrscheinlichkeitsschwelle verglichen wird.

14. Verfahren nach einem der Ansprüche 12 oder 13, wobei die Erkennung der Symbole einen Vergleich des Werts der Parameter von zwei markierten Elementen eines differentiellen Paars mit einem ersten Bezugswert und/oder einen Vergleich der Abweichung zwischen den zwei Werten und einem Bezugswert enthält.

15. Verfahren nach einem der Ansprüche 12 bis 14, wobei die Erkennung der Symbole einen Vergleich mit einer Schwelle der Abweichung zwischen den Werten der Parameter der zwei Elemente eines Paars von Elementen enthält.

## Claims

1. Pattern for coding a numerical information item on a surface, comprising a specific arrangement (P1, P'1) of a plurality of symbols belonging to a set of symbols (ENS1), each symbol in the arrangement being intended for the coding of a portion of said numerical information item, **characterized in that** each symbol consists of at least one differential pair of elements (E1, E2) positioned in a specific way, each element being **characterized by** a parameter, the parameter of the first element of each differential pair having a first value and the parameter of the second element of each differential pair having a second value different from the first value and in that said specific arrangement corresponds to a predetermined arrangement of said symbols forming a reference pattern.

2. Pattern according to Claim 1, in which the symbols of the set of symbols are all different or all identical.

3. Pattern according to either one of the preceding claims, in which the values of the parameters of the two elements (E1, E2) of a differential pair are respectively greater than and less than a first reference value and/or the difference between the two values is greater than a second reference value.

4. Pattern according to any one of the preceding claims, in which each symbol of the set of symbols has at least one first representation (A1, B1, C1, D1) and one second representation (A2, B2, C2, D2) different from the first representation, the values of the parameters of the elements of at least one differential pair of the symbol both being different between the first representation and the second representation.

5. Pattern according to Claim 4, in which the positioning of the first element and of the second element of a differential pair of elements in a representation of a symbol is the reverse of the positioning of the first element and of the second element of the same differential pair of the same symbol in another representation.

6. Pattern according to any one of Claims 3 to 5, in which the difference between the values of the parameters of the two elements of a differential pair is greater than or less than a threshold.

7. Pattern according to any one of Claims 3 to 6, in which the values of the parameters of the two elements of a differential pair of elements are respectively greater than and less than the average value of said parameter within differential pairs neighbouring said differential pair.

8. Security article or device (SUP) comprising at least one pattern according to any one of the preceding claims.

9. Article or security device according to Claim 8, comprising a number of identical and/or different patterns.

10. Article or security device (SUP) according to either of Claims 8 and 9, comprising at least one pattern marked within an image or a logo, or a coded representation of another numerical information item chosen from the group formed by one-dimensional, two-dimensional or three-dimensional barcodes, scatterplots, networks of lines, data matrices.

11. Method for marking a pattern for coding a numerical information item on a surface, **characterized in that** it comprises the following steps:
- a specific arrangement or reference pattern is defined for a plurality of symbols belonging to a set of symbols (ENS1), each symbol in the arrangement being intended for the coding of a portion of numerical information, each symbol consisting of at least one pair of elements positioned in a specific way, - a pattern for coding said numerical information item is created by means of the specific arrangement or reference pattern of a plurality of symbols, by giving each symbol a specific representation such that each symbol consists of at least one differential pair of elements, each element being **characterized by** a parameter, the parameter of the first element having a first value and the parameter of the second element having a second value different from the first value,
- a surface is provided,
- a plurality of elements (E1, E2) is marked on said surface, the elements each being **characterized by** said parameter,
the step for marking the plurality of elements is carried out in such a way that certain marked elements form the numerical information item coding pattern.

12. Method for reading a numerical information item coded in a coding pattern marked on a surface comprising marked elements each **characterized by** a parameter, the method being **characterized in that** it comprises the following successive steps:
a) a specific arrangement or reference pattern (P1) of a plurality of symbols belonging to a set of symbols (ENS1) is stored, each symbol in the arrangement being intended for the coding of a portion of said numerical information, each symbol consisting of at least one differential pair of elements positioned in a specific way, the parameter of the first element of each differential pair having a first value and the parameter of the second element of each differential pair having a second value different from the first value,
b) an image of an area of said surface including a group of marked elements is captured by a study window of a reading device,
c) the stored reference pattern is made to correspond with said group of marked elements,
d) the deviation is measured between the parameter values of the two elements of pairs of the symbols of the group of marked elements in order to determine if they are differential pairs,
e) if not, the reading window is moved relatively in relation to the surface comprising marked elements and an image of another area of said surface including another group of marked elements is captured,
f) the steps c) and d) are repeated until a determined number of elements of the group of marked elements corresponds to differential pairs arranged according to the reference pattern stored,
g) then, the numerical information coded by the elements of the marked coding pattern found within a group of marked elements is read.

13. Method according to Claim 12, in which the number of symbols identified is calculated and the result of the calculation is compared to a probability threshold.

14. Method according to either of Claims 12 and 13, in which the identification of the symbols also comprises a comparison of the value of the parameters of two marked elements of a differential pair to a first reference value and/or a comparison of the difference between the two values and a reference value.

15. Method according to any one of Claims 12 to 14, in which the identification of the symbols comprises a comparison to a threshold of the difference between the values of the parameters of the two elements of a pair of elements.
